# EUROPÄISCHE PATENTSCHRIFT

(11) **EP 0 596 460 B1**
(45) Veröffentlichungstag und Bekanntmachung des Hinweises auf die Patenterteilung: **01.10.1997**
(21) Anmeldenummer: 93117775.2
(22) Anmeldetag: 03.11.1993
(51) Int. Cl.: C09D 201/00, C09D 175/06, C09D 133/14

(54) **Überzugsmittel und dessen Verwendung zur Herstellung von säurebeständigen Lackierungen**
Coating and its use for the manufacture of acid-resistant lacquers
Revêtement et son utilisation pour la préparation de vernis résistants aux acides

(30) Priorität: 06.11.1992 DE 4237490
(43) Veröffentlichungstag der Anmeldung: 11.05.1994
(73) Patentinhaber: Herberts Gesellschaft mit beschränkter Haftung, 42285 Wuppertal (DE)
(72) Erfinder: Flosbach, Carmen, Dr., D-42115 Wuppertal (DE); Frigge, Eva, Dr., D-44789 Bochum (DE); Schubert, Walter, Dr., D-42349 Wuppertal (DE)
(74) Vertreter: Türk, Gille, Hrabal, Leifert

(56) Entgegenhaltungen:
- EP-A- 0 082 291
- EP-A- 0 212 633
- EP-A- 0 224 158
- EP-A- 0 230 957
- EP-A- 0 536 712
- GB-A- 2 102 430

## Beschreibung

Die Erfindung betrifft ein Überzugsmittel, das zur Herstellung von säurebeständigen Lackierungen, insbesondere Klar- und Decklacküberzügen, geeignet ist und sich beispielsweise für die Herstellung von Mehrschichtlackierungen auf dem Kraftfahrzeugsektor eignet.

In der Kraftfahrzeugindustrie werden ständig höhere Anforderungen an die Lackierungen von Fahrzeugen gestellt. Neben hohem Glanz und mechanischer Beständigkeit, beispielsweise gegen Steinschlag, werden Benzin- und Ölbeständigkeit gefordert. Im Rahmen der sich verändernden Umwelt treten zusätzliche Belastungen auf, wie der sogenannte "saure Regen". Deshalb wird an die Lackindustrie die Forderung gestellt, Überzugsmittel für säurebeständige Überzüge und Überzüge bereitzustellen, die weiteren aggressiven Bedingungen widerstehen, wie länger einwirkenden tierischen Exkrementen. Die erhöhte Anforderung an die Säurebeständigkeit führt auch zu strengeren Testmethoden. Wurden Lacke bisher mit verdünnter Essigsäure getestet, so wird jetzt die Einwirkung von bis zu 40 %iger Schwefelsäure bei teilweise erhöhter Temperatur bis zu 70°C untersucht. Der Lack soll dabei an den untersuchten Stellen seine Schutzwirkung und sein Aussehen möglichst nicht verändern. Allenfalls darf eine geringe Rauhigkeit der Oberfläche durch eine derart extreme Säurebelastung auftreten.

Ein weiterer Gesichtspunkt, den die Lackindustrie zu berücksichtigen hat, ist der Umgang mit physiologisch gefährlichen Stoffen, z.B. Cancerogenen oder Mutagenen. Verbindungen, die teilweise nicht unbedenklich sind, sind beispielsweise Isocyanate oder aromatische Lösemittel. Beim Umgang mit Lackbindemitteln auf der Basis von über freie Isocyanatgruppen vernetzenden Lacksystemen können flüchtige reaktive Isocyanate das Arbeitspersonal gefährden. Auch ein Hautkontakt mit isocyanathaltigen Überzugsmitteln sollte vermieden werden.

Es gibt aus diesem Grunde Entwicklungen, den Einsatz von reaktiven Isocyanaten in Überzugsmitteln, insbesondere für die Kraftfahrzeugindustrie zu vermeiden. In der EP-A-0 034 720 werden oxazolidinhaltige Acrylatharze beschrieben, die mit Wasser oder Luftfeuchtigkeit zu Filmen vernetzen. Das System hat jedoch den Nachteil, daß die härtende Oberfläche einem tieferen Eindringen des Wassers in die unteren Lackschichten entgegenwirkt und dort eine vollständige Härtung verhindert. Es sind beispielsweise aus der EP-A-0 050 249 Bindemittelsysteme bekannt, die siliziumhaltige Polymere umfassen, die über hydrolyseempfindliche Gruppen am Siliziumatom mit Feuchtigkeit reagieren und vernetzen können. Diese Systeme haben den Nachteil, daß die Vernetzung abhängig von der relativen Luftfeuchtigkeit ist. Andererseits muß bei der Lagerung sichergestellt werden, daß keine Feuchtigkeit an das Überzugsmittel gelangen kann, da es sonst nicht mehr verarbeitet werden kann.

In der US-A-4 408 018 werden Acrylpolymere beschrieben, in die Acetoacetatgruppierungen eingeführt worden sind. Diese sollen mit α,β-ungesättigten Estern vernetzen. Als Katalysatoren für diese Vernetzungsreaktion sind starke Basen erforderlich. Diese verbleiben nach der Aushärtung im Überzugsfilm und beeinträchtigen die Eigenschaften des Überzugs, z.B. Vergilbung oder Trübung von Klarlackfilmen.

In der DE-A-35 41 140, der EP-A-0 160 824 und der EP-A-0 310 011 werden Härtungskomponenten und Bindemittelsysteme für die Lackindustrie beschrieben. Es handelt sich hierbei um Lösemittelhaltige zweikomponentige Systeme (2K-Systeme), die auf der Basis eines polyungesättigten Acrylatharzes und einer CH-, NH-, oder SH-aktiven Härterkomponente hergestellt werden. Um eine schnelle, ausreichende Vernetzung zu bekommen, sind katalytisch wirksame Verbindungen im Lacksystem notwendig. Als Katalysatoren werden beispielsweise verwendet: tertiäre Amine, Amidine, Guanidine, Phosphane sowie Halogenide von quartären Ammonium-Verbindungen. Die Menge der Katalysatoren kann bis zu 5 Gew.-% betragen. Sie werden zur Beschleunigung für die Härtungsreaktion benötigt, die durch erhöhte Temperaturen unterstützt werden kann.

Die bekannten Überzugsmittel müssen als zweikomponentige Systeme angewendet werden. Sie enthalten katalytisch wirksame Verbindungen und können daher nicht als Einkomponenten-Systeme (1K-Systeme) formuliert werden. Die Topfzeiten der unmittelbar vor der Anwendung gemischten katalysatorhaltigen 2K-Systeme, liegen bei maximal 48 Stunden, das heißt danach sind die Überzugsmittel nicht mehr anwendbar. Werden diese bekannten Überzugsmittel als Klar- oder Decklacke eingesetzt, so weisen sie eine verringerte Vergilbungsstabilität unter Lichtbelastung auf. Außerdem genügen die bekannten Überzugsmittel den vorstehend erwähnten verschärften Kriterien für die Säurebeständigkeit nicht.

In der nichtvorveröffentlichten europäischen Patentanmeldung 536 712, wird ein katalysatorfreies Einkomponenten-Überzugsmittel beschrieben, bei dem ein Vernetzer mit mindestens zwei CH-aciden Wasserstoffatomen mit einer acryloylfunktionellen Verbindung vernetzt.

Aufgabe der Erfindung ist die Bereitstellung eines Überzugsmittels, das frei von reaktivem Isocyanat ist und zu Überzügen führt, die den verschärften Anforderungen an die Säurebeständigkeit genügen und nicht vergilben.

Es hat sich gezeigt, daß die Aufgabe gelöst werden kann durch ein katalysatorfreies Überzugsmitteln, das als Einkomponentensystem formuliert werden kann und das enthält:
A) 10 - 90 Gew.-% eines oder mehrerer als Vernetzer wirkender Verbindungen, mit im Mittel mindestens zwei zur Umesterung befähigten Gruppen,
B) 90 - 10 Gew.-% eines oder mehrerer (Meth (Meth)acrylatcopolymere, Polyester- und/oder Polyurethanharze mit mindestens einer über das Carbonyl-Kohlenstoffatomen von Carbonyl-, Ester- und/oder Amidgruppen gebundenen α,β-ungesättigten Gruppe, mit einem C=C-Äquivalentgewicht von 85-1800 und einem Zahlenmittel der Molmasse (Mn) von 170 - 10000 g/mol, sowie mit einer OH-Zahl von 20 bis 350 mg KOH/g, bevorzugt von 20 - 200 mg KOH/g.
   Wobei sich die Gew.-% der Komponenten A) und B) jeweils auf den Festkörper beziehen und auf 100 Gew.-% addieren, sowie
C) 0,1 - 10 Gew.-% eines oder mehrerer thermisch und/oder photochemisch aktivierbarer Radikalinitiatoren,
D1)0 - 20 Gew.-% eines oder mehrerer Melaminharzvernetzer,
D2)0 - 40 Gew.-% eines oder mehrerer blockierter Polyisocyanate,
E) 0 - 40 Gew.-% eines oder mehrerer (meth)acryloyl- funktionalisierter Reaktivverdünner, die frei von OH-Gruppen sind, und
F) 0 - 30 Gew.-% eines oder mehrerer Diole, Triole, Polyole und/oder hydroxyfunktioneller Polyether, Polyester und/oder (Meth)acrylcopolymerer,
   sowie gegebenenfalls Lösemittel, lackübliche Additive, gegebenenfalls Wasser, gegebenenfalls Pigmente und gegebenenfalls Füllstoffe.

Es hat sich gezeigt, daß ein derartiges Einkomponenten-Überzugsmittel lagerfähig ist. Es wird ohne Katalysator appliziert und kann nach dem Auftrag durch Erhitzen auf Temperaturen von 100-180°C vernetzt bzw. gehärtet werden. Die erhaltenen Überzüge bestehen einen verstärkten Säuretest, nämlich die Behandlung mit bis zu 40%iger Schwefelsäure bei erhöhter Temperatur bis zu 70°C. Die erhaltenen Überzüge weisen eine gute Härte auf.

Bevorzugt handelt es sich bei den in den erfindungsgemäßen Überzugsmitteln als Komponente A) eingesetzten Vernetzern um solche, die mindestens zwei umesterungsfähige Gruppen enthalten, die aus einer oder mehreren der folgenden Gruppierungen stammen, die gleich oder verschieden sein können: 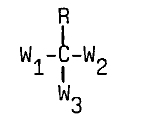 worin R = Alkyl und bevorzugt H, 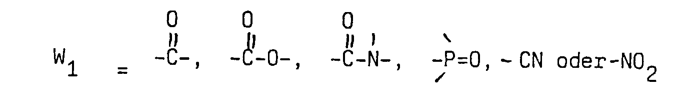 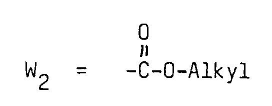 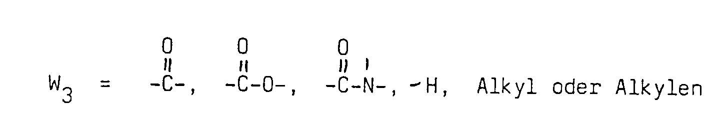 wobei Alkyl und Alkylen bevorzugt 1 bis 6 C-Atome haben, und wobei die vorstehend für die Reste W₁, W₂ und W₃ definierten Carboxyl- oder Carbonamid-Gruppen jeweils über das Kohlenstoffatom an die Gruppe CR gebunden sind und die Gruppe CR über mindestens einen der Reste W₁, W₂ und/oder W₃ an eine polymere oder oligomere Einheit gebunden ist. Die Funktionalität der Komponente A) beträgt im Mittel > 2 pro Molekül.

Wie vorstehend erwähnt, beträgt die Funktionalität der Komponente (A) im Mittel > 2. Dies bedeutet, daß im Gemisch mit höherfunktionellen Molekülen auch monofunktionelle Moleküle verwendet werden können.

Die vorstehend beschriebenen Vernetzerkomponenten A) enthalten mit W₂ mindestens eine Estergruppe, die mit hydroxylgruppenhaltigen Verbindungen im Sinne einer Umesterungsaktion vernetzen kann.

Bevorzugt sind die Vernetzerverbindungen im wesentlichen frei von primären, sekundären oder tertiären Aminogruppen, da diese die Lagerstabilität und die Lichtbeständigkeit negativ beeinflussen können.

Im Folgenden sind Beispiele für umesterungsfähige Vernetzerkomponenten A) aufgeführt, die unter die vorstehende bevorzugte allgemeine Formel fallen. Diese Beispiele werden im Folgenden in drei Gruppen A1, A2 und A3 unterteilt.

In der Gruppe A1 sind im Molekül im Mittel mindestens zwei Gruppen enthalten, die sich von Methantricarbonsäuremonoamideinheiten oder Acetessigsäureester-2-carbonsäureamiden ableiten.

Geeignete Verbindungen A1 sind beispielsweise Umsetzungsprodukte von Malonsäurediester wie Malonsäuredimethyl-, diethyl-, -dibutyl-, -dipentylester oder Acetessigsäureester wie Acetessigsäuremethyl-, -ethyl-, -butyl-, -pentylester mit Polyisocyanaten.

Beispiele für derartige erfindungsgemäß einsetzbare Isocyanate sind cycloaliphatische, aliphatische oder aromatische Polyisocyanate wie Tetramethylen-diisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcylohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4'-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Prepolymeren entspricht das Verhältnis von Isocyanatgruppen zu gegenüber NCO reaktiven Wasserstoffatomen 1,05 bis 10:1, vorzugsweise 1,1 bis 3:1, wobei die Wasserstoffatome vorzugsweise aus Hydroxylgruppen stammen.

Die Art und Mengenverhältnisse der bei der Herstellung der NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Als Verbindung A1 eignen sich aber auch Umsetzungsprodukte von Estern und Teilestern mehrwertiger Alkohole der Malonsäure mit Monoisocyanaten. Mehrwertige Alkohole sind z.B. zwei- bis fünf-wertige Alkohole wie Ethandiol, die verschiedenen Propan-, Butan-, Pentan- und Hexandiole, Polyethylen- und Polyproplyendiole, Glycerin, Trimethylolethan und - propan, Pentaerythrit, Hexantriol und Sorbit. Geeignete Monoisocyanate sind z.B. aliphatische Isocyanate wie n-Butylisocyanat, Octadecylisocyanat, cycloaliphatische Isocyanate wie Cyclohexylisocyanat, araliphatische Isocyanate wie Benzylisocyanat oder aromatische Isocyanate wie Phenylisocyanat.

Geeignet sind auch die entsprechenden Malonester von OH-Gruppen enthaltenden Acrylharzen, Polyester, Polyurethanen, Polyethern, Polyesteramiden und -imiden und/oder Umsetzungsprodukte von Malonsäurehalbestern wie Malonsäuremonoethylester mit aliphatischen und aromatischen Epoxidharzen, z.B. epoxidgruppenhaltigen Acrylatharzen, Glycidylethern von Polyolen wie Hexandiol, Neopentylglykol, Diphenylolpropan und -methan und Glycidylgruppen enthaltenden Hydantoinen, ferner Gemische dieser Verbindungen.

Die Beispiele der folgenden Gruppe A2 zeigen eine geeignete Härtungskomponente, die mindestens zwei Gruppen der Formel (I) 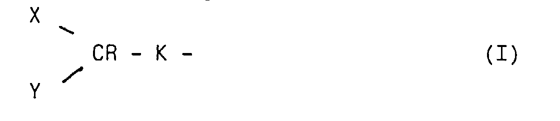 oder Struktureinheiten der Formel (I') 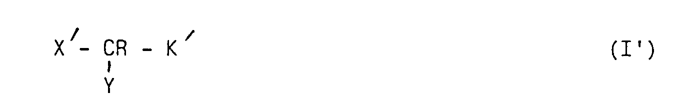 enthält, in der bedeuten: 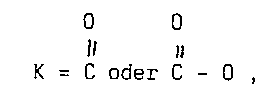 wobei die letztere Gruppe über das C-Atom an die CR-Gruppe gebunden ist; 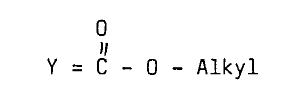 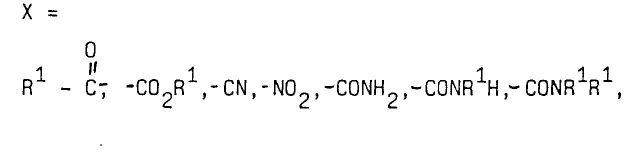 wobei die Reste R¹ gleich oder verschieden sein können und für einen Kohlenwasserstoffrest, vorzugsweise einen Alkylrest mit 1 bis 12, vorzugsweise 1 bis 6 C-Atomen stehen, der auch durch Sauerstoff oder einen N-Alkylrest unterbrochen sein kann, 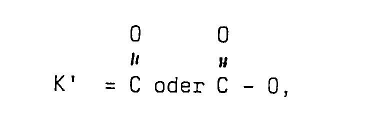 wobei letzere Gruppe über das C-Atom an die CR-Gruppe gebunden ist,

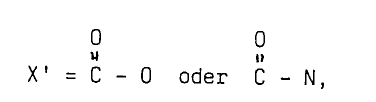

Die Zahl der Gruppen (I) in dem erfindungsgemäßen Härter beträgt vorzugsweise 2 bis 20 und insbesondere 2 bis 10, wobei sich die größeren Zahlenwerte auf oligomere oder polymere Produkte beziehen und hier Mittelwerte darstellen.

Vorzugsweise besitzt die erfindungsgemäß verwendbare Härtungskomponente A2 die Formel (II) 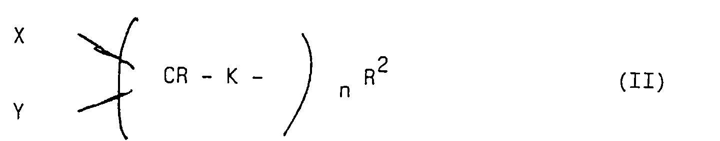 in der X, Y und K die obige Bedeutung haben, R² den Rest eines Polyols 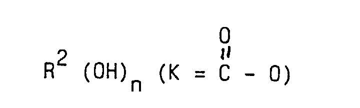 oder den Rest R² einer Polycarbonsäure 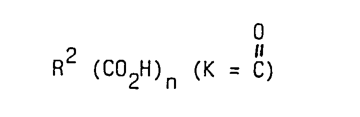 darstellt und n mindestens 2, vorzugsweise 2 bis 20, insbesondere 2 bis 10 bedeutet. Im Falle von oligomeren oder polymeren Härtungskomponenten handelt es sich bei diesen Zahlenangaben wiederum um Mittelwerte.

Weiterhin bevorzugt sind Härtungskomponenten, die unter die Gruppe A2 fallen, die man durch nicht quantitativ erfolgende Umesterung von Verbindungen der Formel (III) oder der Formel (IV) 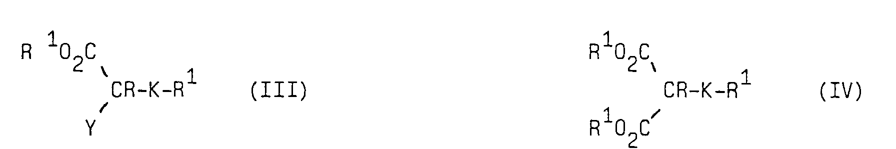 mit Polyolen R²(OH)ₙ erhält, wobei Y, K und R¹ die obige Bedeutung haben, und die Reste R¹ gleich oder verschieden sein können.

Bei den vorstehend genannten Polyolen R²(OH)ₙ kann es sich um einen mehrwertigen Alkohol handeln, der vorzugsweise 2 bis 12, insbesondere 2 bis 6 C-Atome enthält. Beispiele hierfür sind: Ethylenglykol, Propylenglykol-(1,2) und -(1,3), Butylenglykol-(1,4) und -(2,3), Di-β-hydroxyethylbutandiol, Hexandiol-(1,6), Octandiol-(1,8), Neopentylglykol, Cyclohexandiol-(1,6), 1,4-Bis-(hydroxymethyl)-cyclohexan, 2,2-Bis-(4-hydroxycylohexyl)-propan, 2,2-Bis-(4-(β-hydroxyethoxy)phenyl)-propan, 2-Methyl-1,3-propandiol, Glycerin, Trimethylolpropan, Hexantriol-(1,2,6), Butantriol-(1,2,4), Tris-(β-hydroxyethyl)-isocyanurat, Trimethylolethan, Pentaerythrit und deren Hydroxyalkylierungsprodukte, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol. Auch Polyester, die aus oder mit Lactonen, z.B.ε-Caprolacton oder Hydroxycarbonsäuren, wie z.B. Hydroxypivalinsäure, γ-Hydroxydecansäure, γ-Hydroxycapronsäure, Thioglykolsäure erhalten werden, können eingesetzt werden. Der Index n in obiger Formel (II) steht im Falle derartiger mehrwertiger Alkohole vorzugsweise für 2 bis 4.

Alternativ kann das Polyol eine oligomere oder polymere Polyolverbindung (Polyolharz) darstellen, deren Zahlenmittel des Molekulargewichts, Mn, (bestimmt mittels Gelchromatographie; Polystyrolstandard), üblicherweise im Bereich von etwa 170 bis 10000, vorzugsweise etwa 500 bis etwa 5000 liegt. In Sonderfällen kann Mn jedoch 10000 g/mol und mehr betragen. Als Oligomere/Polymere kommen dabei Polymerisate, Polykondensate oder Polyadditionsverbindungen in Betracht. Die Hydroxylzahl beträgt im allgemeinen 30 bis 250, vorzugsweise 45 bis 200 und insbesondere 50 bis 180 mg KOH/g. Diese OH-gruppenhaltigen Verbindungen können gegebenenfalls noch andere funktionelle Gruppen enthalten, wie Carboxylgruppen.

Beispiele für derartige Polyole sind Polyetherpolyole, Polyacetalpolyole, Polyesteramidpolyole, Polyamidpolyole, Epoxidharzpolyole oder deren Umsetzungsprodukte mit CO₂, Phenolharzpolyole, Polyharnstoffpolyole, Polyurethanpolyole, Celluloseester und -etherpolyole, teilweise verseifte Homo- und Copolymerisate von Vinylestern, teilweise acetalisierte Polyvinylalkohole, Polycarbonatpolyole, Polyesterpolyole oder Acrylatharzpolyole. Bevorzugt sind Polyetherpolyole, Polyesterpolyole, Acrylatharze und Polyurethanpolyole. Derartige Polyole, die auch in Mischung eingesetzt werden können, sind beispielsweise in der DE-OS 31 24 784 beschrieben.

Beispiele für Polyurethanpolyole ergeben sich aus der Umsetzung von Di- und Polyisocyanaten mit einem Üßerschuß an Di- und/oder Polyolen. Geeignete Isocyanate sind z.B. Hexamethylendiisocyanat, Isophorondiisocyanat, Toluylendiisocyanat als auch Isocyanate, gebildet aus drei Molen eines Diisocyanats wie Hexamethylendiisocyanat oder Isophorondiisocyanat, und Biurete, die aus der Reaktion von drei Molen eines Diisocyanates mit einem Mol Wasser hervorgehen. Geeignete Polyharnstoffpolyole können in ähnlicher Weise durch Umsetzen von Di- und Polyisocyanaten mit äquimolaren Mengen von Aminoalkoholen, z.B. Ethanolamin oder Diethanolamin, erhalten werden.

Beispiele für Polyesterpolyole sind die bekannten Polykondensate aus Di- oder Polycarbonsäuren oder deren Anhydriden, wie Phthalsäureanhydrid, Adipinsäure usw., und Polyolen wie Ethylenglykol, Trimethylolpropan, Glycerin usw.

Geeignete Polyamidpolyole können in ähnlicher Weise wie die Polyester erhalten werden, indem man die Polyole zumindest teilweise durch Polyamine, wie Isophorondiamin, Hexamethylendiamin, Diethylentriamin usw. ersetzt.

Beispiele für Polyacrylatpolyole oder OH-gruppenhaltige Polyvinylverbindungen sind die bekannten Copolymerisate aus hydroxylgruppenhaltigen (Meth)Acrylsäureestern oder Vinylalkohol und anderen Vinylverbindungen, wie z.B. Styrol oder (Meth)Acrylsäureestern.

Die obigen Polycarbonsäuren R²(CO₂H)ₙ, wobei n hier bevorzugt 2 bis 4 ist, können aliphatischer, cycloaliphatischer, aromatischer und/oder heterocyclischer Natur sein und gegebenenfalls, z.B. durch Halogenatome, substituiert und/oder gesättigt sein. Als Beispiele für solche Carbonsäuren und deren Derivate seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, 1,3- und 1,4-Cyclohexandicarbonsäure und Tetrachlorphthalsäure, Endomethylentetrahydrophthalsäure und ihr Hexachlorderivat, Glutarsäure, Maleinsäure, Fumarsäure, dimere und trimere Fettsäuren, wie Ölsäure, gegebenenfalls in Mischung mit monomeren Fettsäuren oder cyclischen Monocarbonsäuren, wie Benzoesäure, p-tert-Butylbenzoesäure oder Hexahydrobenzoesäure. Weiterhin die Umsetzungsprodukte der oben genannten Polyole R²(OH)ₙ mit cyclischen Carbonsäureanhydriden.

Bei der erfindungsgemäß verwendbaren Härtungskomponente A2 handelt es sich, je nach Art der Polyol- bzw. Polycarbonsäurekomponente, um mehr oder weniger viskose Flüssigkeiten oder um Feststoffe, die zumindest in den üblichen Lacklösemitteln weitgehend löslich sind und vorzugsweise weniger als 5 Gew.%, insbesondere weniger als 1 Gew.% an vernetzten Anteilen enthalten. Das Umesterungs-Äquivalentgewicht, das ein Maß für die Menge an Gruppen (I) bzw. Struktureinheiten (I') in (A2) ist, liegt im allgemeinen zwischen 100 und 5000, vorzugsweise 200 und 2000 und das Zahlenmittel des Molekulargewichts Mn in der Regel zwischen 200 und 10000, vorzugsweise zwischen 500 und 5000 (gelchromatographisch bestimmt; Polystyrolstandard). Verfahren zur Herstellung solcher Verbindungen sind in der EP-A-0 310 011 näher beschrieben.

Weitere Beispiele für die erfindungsgemäß verwendbare Härterkomponente sind solche vom Typ A3, bei dem sich die umesterungsfähige Gruppierung ableitet von einer Verbindung mit der Gruppierung -CO-CRR³-COOR⁴ worin R³ C₁-C₈-Alkyl, H, vorzugsweise Wasserstoff und R⁴=Alkyl wie z.B. Methyl, Ethyl, Butyl, t-Butyl ist.

Die vorstehenden Gruppierungen von A3 können an mindestens eine mehrwertige monomere oder polymere Verbindung gebunden sein. Sie können beispielsweise an mindestens eine Verbindung der Gruppe ein- oder mehrwertige Alkohole, OH-Gruppen enthaltende Polymere, Polyamine und Polymercaptane gebunden sein. Sie sind, bezogen auf die Umesterungsfuktion, mehrwertig. So können sie beispielsweise durch Veresterung eines Polyepoxids mit einem die Gruppierung bildenden Dicarbonsäuremonoester, z.B. Malonsäuremonoester, hergestellt worden sein. Man erhält so eine Komponente A3 mit einer umesterungsfähigen Gruppe je Epoxidgruppe. Hierbei lassen sich aromatische oder aliphatische Polyepoxide einsetzen.

Weitere Beispiele für geeignete Dicarbonsäuremonoester sind Malonsäuremonoalkylester, Acetondicarbonsäuremonoalkylester wobei der Alkylrest geradkettig oder verzweigt mit 1 bis 6 C-Atomen z. B. Methyl, Ethyl, n-Butyl oder t-Butyl sein kann.

Die Härterkomponenten A) können in üblichen Lösemitteln hergestellt werden. Es ist günstig, solche Lösemittel zu verwenden, die später bei der Herstellung des Überzugsmittels nicht stören. Es ist auch günstig, den Gehalt an organischen Lösemitteln möglichst gering zu halten. Wenn die Härterkomponente A polare Gruppen enthält, z.B. Amid- oder Urethan-Gruppierungen, so ist eine leichte Dispergierung in Wasser möglich. Dies kann gegebenenfalls auch dadurch unterstützt werden, daß die Vernetzerkomponenten neutralisierbare ionische Gruppen, z.B.

Carboxylgruppen, im Oligomer- oder Polymergerüst enthalten. Solche Vernetzer mit ionischen Gruppen können gut in Wasser dispergiert werden. Dabei kann der Gehalt an organischen Lösemitteln auf niedrige Werte gesenkt werden, ohne die Viskosität der Vernetzerlösung wesentlich zu erhöhen.

Als Komponente B) werden in den erfindungsgemäßen Bindemittelzusammensetzungen ein oder mehrere (Meth)acrylcopolymere, Polyester und/oder Polyurethanharze eingesetzt, die mindestens eine, bevorzugt mindestens zwei über das Carbonyl-Kohlenstoffatom von Carbonyl-, Ester- und/oder Amidgruppen gebundene α,β-ungesättigte Gruppen aufweisen, die wie vorstehend definiert sind. Außerdem enthalten sie OH-Gruppen entsprechend einer OH-Zahl bis zu 350 mg KOH/g, insbesondere mindestens eine, bevorzugt zwei OH-Gruppen die mit den umesterungsfähigen Gruppen von Komponente A reagieren können. Die α,β-ungesättigten Gruppen der Komponente B) können in die Ketten der Copolymeren oder Harze eingebaut sein Sie können bevorzugt auch seiten- und/oder endständig sein. Geeignete Verbindungen B) sind beispielsweise in der DE-PS-835 809, in der US-PS-4 408 018 sowie in der EP-OS 16 16 79 und 22 41 58 beschrieben, auf die hier Bezug genommen wird. Es sind Verbindungen B) mit bevorzugt mindestens zwei Gruppen der Formel

R⁵R⁴C = CR⁴ - Z (V)

in der bedeuten:
- R⁵ =: Wasserstoff oder ein Kohlenwasserstoffrest, vorzugsweise ein Alkylrest mit 1 bis 12, vorzugsweise mit 1 bis 4 C-Atomen, wie die Methyl-, Ethyl-, n-Proply-, Iso-Propyl-, n-Butyl- oder tert. Butylgruppe;
- R⁴ =: gleich oder verschieden und Wasserstoff, ein Kohlenwasserstoffrest, vorzugsweise Alkylrest mit 1 bis 10, vorzugsweise 1 bis 4 C-Atomen, eine Estergruppe -CO₂R¹, eine -CN, -NO₂, -SO₂-, -CONHR¹, -CONR¹R¹ oder -COR¹-Gruppe, wobei R¹ gleich oder verschieden, und wie vorstehend für die Formel I definiert sind: 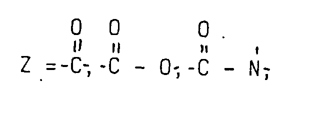
wobei die beiden letzteren Gruppen über das C-Atom an die CR⁴-Gruppe gebunden sind.
Bevorzugt stehen R⁵ und R⁴ in der oben R⁵R⁴-C-Gruppe jeweils für Wasserstoff.

Die Gruppe R⁵R⁴C = CR⁴ - Z - (V) kann beispielsweise von einer ein- oder mehrfach ungesättigten Mono- oder Dicarbonsäure mit 2 bis 20, vorzugsweise 3 bis 10 C-Atomen abgeleitet sein.

Beispiele für solche Carbonsäuren sind Crotonsäure, Citraconsäure oder deren Anhydrid, Sorbinsäure, Fumarsäure, Mesaconsäure, substituierte und unsubstituierte Zimtsäuren, Dihydrolävulinsäure, Malonsäuremononitril, α-Cyanacrylsäure, Alkylidenmalonsäure, Alkylidenacetessigsäure, vorzugsweise Acrylsäure, Methacrylsäure und/oder Maleinsäure oder dessen Anhydrid. Die über die Gruppe Z, aber auch über den Rest R⁴ mögliche Anknüpfung an einen polymeren Träger, kann über Ester-, Amid-, Urethan- oder Harnstoffgruppen erfolgen.

Entsprechend dem Vorstehenden können die Gruppen gemäß der Formel (V) an den Rest eines Polyols gebunden sein, wobei dieser Rest auch oligomer oder polymer sein kann.

Als Polyole kommen hier grundsätzlich die gleichen in Frage, wie weiter oben im Zusammenhang mit der Komponente A) erwähnt, also mehrwertige Alkohole oder oligomere bzw. polymere Polyolverbindungen, z.B. Polyetherpolyole, Polyesterpolyole, Acrylatharzpolyole und Polyurethanpolyole.

Außerdem kann die über ein Carbonylkohlenstoffatom gebundene α,β-ungesättigte Gruppe an Polymere gebunden sein, z.B. Kondensationspolymere, wie Polyester oder Polyadditionspolymere, wie Polyurethane, Polyether oder (Meth)acrylcopolymere oder Vinylpolymerisate, wie Glycidyl(meth)acrylatcopolymere. Erwähnt seien hier beispielsweise Urethanacrylate, erhalten durch Umsetzung von Polyisocyanaten, wie Hexamethylendiisocyanat mit Hydroxyalkylacrylaten, wie Hydroxyethylacrylat oder durch Reaktion von hydroxylgruppenhaltigen Polyestern, Polyethern, Polyacrylaten mit Polyisocyanaten und Hydroxyalkylacrylaten, Urethanacrylate, erhalten durch Reaktion von Caprolactondiol oder -triol mit Polyisocyanaten und Hydroxyalkylacrylaten, Polyetheracrylate, erhalten durch Veresterung von Hydroxypolyethern mit Acrylsäure, Polyesteracrylate, erhalten durch Veresterung von Hydroxypolyestern mit Acrylsäure, Polyacrylate, erhalten durch Reaktion von Acrylsäure mit Vinylpolymerisaten mit Epoxidgruppen, z.B. Copolymerisate von Glycidyl(meth)acrylat oder Vinylglycidylether. Unter (Meth)acryl ist hier und im Folgenden Acryl- und/oder Methacryl zu verstehen.

Auch Gemische der obigen Verbindungen sind als Komponente B) möglich.

Das C=C-Äquivalentgewicht der Komponente B) liegt beispielsweise bei 85 bis 1800, vorzugsweise bei 180 bis 1200 und das Zahlenmittel der Molmasse (Mn) beispielsweise bei 170 bis 10000 und vorzugsweise 500 bis 5000. Die Komponente (B) besitzt eine OH-Zahl von 20 bis unter 350, besonders bevorzugt von 20 bis 200 mg KOH/g.

Bevorzugt ist die Komponente B) wie ebenfalls bevorzugt die Komponente A) im wesentlichen frei von primären, sekundären und tertiären Aminogruppen.

Die erfindungsgemäß eingesetzten Überzugsmittel enthalten als Komponente C) 0,1 - 10 Gew.% thermisch und/oder photochemisch aktivierbarer Initiatoren, die durch Zerfall freie Radikale bilden. Die Einsatzmenge beträgt bevorzugt 0,1 bis 6 Gew.-%, bezogen auf die Gesamtmenge der Komponenten A) und B).

Als thermisch aktivierbare Initiatoren können übliche thermisch aktivierbare Initiatoren eingesetzt werden, wie dem Fachmann geläufige übliche Peroxide, wie z. B. Di-tert-Butylperoxid, Tertiär-Butylperbenzoat, Tertiär-Butylperoctoat; Hydroperoxide wie z.B. Tertiär-Butylhydroperoxid, Cumolhydroperoxid; und Azoverbindungen wie z. B. Azo-bis-isobutyronitril. Bevorzugt sind jedoch Initiatoren mit labilen Kohlenstoff-Kohlenstoff-Bindungen (sog. C-C-Initiatoren), wie beispielsweise Benzpinakolderivate, wie z.B. Benzpinakol, Benzpinakoldisilylether (monomer oder oligomer), Benzpinakoldimethylether, sowie Tetraphenylethan und Tetraphenylethandinitril.

Die erfindungsgemäßen Bindemittelzusammensetzungen können als Komponente C) auch übliche Photoinitiatoren enthalten, wie sie für die radikalische und die ionische Polymerisation bekannt sind. Geeignet sind beispielsweise Initiatoren, die im Wellenlängenbereich von 190 bis 400 nm absorbieren.

Beispiele für verwendbare radikalische Initiatoren sind chlorhaltige Initiatoren, wie chlorhaltige aromatische Verbindungen, z.B. beschrieben in US-A-4 089 815; aromatische Ketone, wie in US-A-4 318 791 und EP-A-0 161 463 beschrieben; Hydroxyalkylphenone, wie in US-A-4 347 111 beschrieben; wasserlösliche Initiatoren, beispielsweise auf der Basis von Hydroxylalkylphenonen, wie in US-A-4 602 097 beschrieben, ungesättigte Initiatoren wie OH-funktionelle aromatische Verbindungen, die beispielsweise mit Acrylsäure verestert wurden, wie in US-A-3 929 490, EP-A-0 143 201 und EP-A-0 341 560 beschrieben; oder Kombinationen von derartigen Initiatoren, wie sie beispielsweise in US-A-4 017 652 beschrieben werden.

Spezielle Beispiele sind 2-Methyl-2-hydroxy-propiophenon, Benzophenon, Thioxanthonderivate, Acylphospinoxide und Michlers Keton.

Besonders bevorzugte verwendbare radikalische Initiatoren sind Phosphinoxide und Kombinationen von Phosphinoxiden mit weiteren üblichen Initiatoren, wie vorstehend beschrieben.

Beispiele verwendbarer kationischer Initiatoren sind Triarylsulfoniumsalze der allgemeinen Formel

(Aryl)₃ S⁺ X⁻

worin Aryl einen Arylrest, wie den Phenylrest, darstellt und X⁻ ein Anion ist, wie SbF₆⁻, PF₆⁻, AsF₆⁻ und BF₄⁻, wie in US-A-4 417 061, EP-A-0 327 194 und DE-A-2 904 626 beschrieben. Weitere Beispiele für kationische Initiatoren sind Oxoniumsalze, Iodoniumsalze und Diazoniumsalze, wie sie beispielsweise in folgenden Literaturstellen beschrieben werden: EP-A-0 464 131, US-A-4 421 904, EP-A-0 145 633, EP-A-0 310 881, EP-A-0 310 882 (Iodoniumsalze); DE-A-3 808 590 und DE-A-3 808 591 (Diazoniumsalze).

Außer diesen Initiatoren können auch Metallocen-Komplexe eingesetzt werden, wie z.B. beschrieben in EP-A-0 094 915.

Die erfindungsgemäß eingesetzten Überzugsmittel enthalten als Komponente D1) 0 bis 20 Gew.% eines oder mehrerer handelsüblicher Melaminharze, die Methanol, Butanol-, Isobutanol-veräthert oder mischverethert sein können wie z. B. die Handelsprodukte Setamine VS 138, Maprenal MF 610, Cymel 254, Cymel 301 und Cymel 303.

Die erfindungsgemäßen Überzugsmittel können als Vernetzer (Komponente D2) ein oder mehrere verkappte Polyisocyanate enthalten. Beispiele für den verkappten Polyisocyanate zugrunde liegende einsetzbare Polyisocyanate sind cycloaliphatische, aliphatische oder aromatische Polyisocyanate wie Tetramethylen-diisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4',4''-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung.

In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Die Isocyanatgruppierungen der Polyisocyanate sind vollständig verkappt. Als Verkappungsmittel können übliche Verkappungsmittel verwendet, wie sie beispielsweise auf dem Lacksektor eingesetzt werden. Beispiele für verwendbare Verkappungsmittel sind Malonsäuredimethylester, Malonsäuredimethylester, Acetessigsäureethylester, epsilon-Caprolactam, Acetanilid, Acetylaceton, Acetomoxim, Propandiol-1,2 und/oder Butanonoxim, wobei das zuletzt genannte Verkappungsmittel bevorzugt ist.

Die Verkappung der Polyisocyanate kann z.B. durch Erwärmen ein oder mehrerer Polyisocyanate mit dem Verkappungsmittel erfolgen. Beispielsweise können ein oder mehrere Polyisocyanate vorgelegt und unter Rühren erhitzt werden, z.B. auf etwa 80°C, und das Verkappungsmittel (beispielsweise während etwa 10 min.) zudosiert werden. Es wird solange gerührt, bis die NCO-Zahl kleiner als 0,1 % beträgt. Es ist auch möglich, ein oder mehrere Polyisocyanate mit einem Gemisch aus zwei oder mehreren Verkappungsmitteln zu verkappen.

Der Vorteil der Verwendung von zwei oder mehreren unterschiedlichen Polyisocyanaten und/oder zwei oder mehreren unterschiedlichen Verkappungsmitteln liegt darin, daß hiermit die Vernetzung über einen weiten Temperaturbereich erfolgen kann.

Die erfindungsgemäßen Überzugsmittel können als Komponente E) zur Viskositätseinstellung alpha,beta-ungesättigte Reaktivverdünner enthalten. Diese sind frei von Hydroxylgruppen. Im allgemeinen sind sie bei Raumtemperatur flüssig und bevorzugt niedrigviskos.

Beispiele für solche Reaktivverdünner sind (Meth)acrylate wie z. B. Lauryl(meth)acrylat, Alkylglykoldi(meth)acrylate wie Ethylenglykoldi(meth)acrylat, Diethylenglykoldi(meth)acrylat, Propylenglykoldi(meth)acrylat, Tripropylenglykoldi(meth)acrylat, 1,6-Hexamethylendi(meth)acrylat, Trimethylolpropantri(meth)acrylat, Trimethylolpropantriethoxytri(meth)acrylat, Pentaerythrittetra(meth)acrylat, sowie ethoxylierte und propoxylierte Varianten, oder 2-Acetoacetoxyethyl(meth)acrylat.

Unter (Meth)acrylat bzw. (meth)acrylat wird in der vorliegenden Beschreibung und den Ansprüchen Acrylat und/oder Methacrylat bzw. acrylat und/oder methacrylat verstanden.

Die erfindungsgemäßen Überzugsmittel können als Komponente F) hydroxyfunktionelle Verbindungen enthalten, die beispielsweise ausgewählt sind aus
a) Polyolen, mit mindestens zwei Hydroxylgruppen (also einschließlich Diole, Triolen usw.) aus der Gruppe von geraden oder verzweigten Alkandiolen und Polyolen mit 2 bis 12 Kohlenstoffatomen, oder
b) hydroxylgruppenhaltige Poly(meth)acrylaten oder Poly(meth)acrylamiden auf der Basis von (Meth)acrylsäurehydroxyalkylestern mit 2 bis 12 Kohlenstoffatomen im Alkylteil oder (Meth)acrylsäurehydroxyalkylamiden mit 2 bis 12 Kohlenstoffatomen im Alkylteil, gegebenenfalls copolymerisiert mit alpha,beta-ungesättigten Monomeren, mit einem Zahlenmittel des Molekulargewichts Mn von 1000 bis 10000, g/mol oder
c) Polyester-Polyolen oder Polyether-Polyolen jeweils mit einem Zahlenmittel des Molekulargewichts Mn von 500 bis 2000 g/mol.

Beispiele für Alkan-di- und -polyole der Gruppe a) sind solche mit geraden und verzweigten Ketten mit 2 bis 12 Kohlenstoffatomen. Sie enthalten mindestens zwei Hydroxyfunktionen, vorzugsweise jedoch mindestens drei. Beispiele hierfür sind Propandiol, Butandiol, Hexandiol, Glycerin, Trimethylpropan und Pentaerythrit.

Beispiele für hydroxylgruppenhaltige Poly(meth)acrylate b) auf der Basis von (Meth)acrylsäurehydroxylalkylester der Acrylsäure oder Methacrylsäure mit Alkoholen mit mindestens zwei Hydroxylgruppen, wie 1,4-Butandiol-mono(meth)acrylat, 1,6-Hexandiol-mono(meth)acrylat oder 1,2,3-Propantriol-mono(meth)acrylat. Beispiele für hydroxylgruppenhaltige Poly(meth)acrylamide b) auf der Basis von (Meth)acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid.

Die hydroxylgruppenhaltigen Poly(meth)acrylate der Komponente b) können Homo- oder Copolymerisate sein. Sie weisen bevorzugt Zahlenmittel des Molekulargewichts von 1000 bis 10000, besonders bevorzugt von 3000 bis 6000 g/mol auf. Copolymerisierbare Monomere zur Herstellung der Copolymerisate sind alpha,beta-ungesättigte Monomere, radikalisch polymerisierbare Monomere aus der Gruppe der Ester von alpha,beta-ungesättigten Carbonsäuren, wie Acrylsäure oder Methacrylsäure, wobei Beispiele für die Alkoholkomponente Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol-, alpha-Methylstyrol und Vinyltoluol. Weitere Beispiele sind Vinylester kurzkettiger Carbonsäure, wie Vinylacetat, Vinylpropionat und Vinylbutyrat. Ebenfalls möglich ist die Verwendung von silanmodifizierten Monomeren, wie z.B. gamma-Methacryloxypropyltrimethoxy-silan oder gamma-Methacryloxypropyl-tris(2-methoxyethoxy)-silan.

Das erfindungsgemäße Überzugsmittel umfaßt eine Mischung aus den Komponenten A, B, D, E, F und dem Radikalinitiator C). Die Bindemittel sind untereinander verträglich und können zur besseren Mischbarkeit mit Lösemitteln gemischt werden. Dafür sind Lösemittel bevorzugt, die später im Lack nicht negativ wirken.

Erfindunggemäß können die Komponenten A) bis F) oder die Mischungen davon in lösemittelhaltiger Form eingesetzt werden. Es ist jedoch auch möglich, wäßrige Überzugsmittel herzustellen. Dazu können die Komponenten gegebenenfalls mit geringen Lösemittelanteilen und gegebenenfalls zusammen mit Emulgatoren in die Wasserphase überführt werden. Selbstverständlich ist es auch möglich, wasserlösliche Komponenten A bis F einzusetzen.

Bei den Lösungsmitteln handelt es sich bevorzugt um solche, die mit Wasser mischbar sind. Die Lösungsmittelmenge kann beispielsweise bis zu 20 Gew.%, bevorzugt bis zu 10 Gew.%, bezogen auf die fertige wäßrige Zusammensetzung, betragen. Als Emulgatoren können ionische oder nichtionische, bevorzugt nichtionische Emulgatoren, eingesetzt werden. Der Gehalt an Emulgator kann beispielsweise bei 0,5 bis 30 Gew.%, bevorzugt zwischen 1,5 und 15 Gew.%, bezogen auf den Festkörperanteil der Komponenten A bis F im wäßrigen Überzugsmittel liegen.

Zur Bereitung der wäßrigen Disperionen können übliche Verfahren angewendet werden, die dem Fachmann geläufig sind. So können beispielsweise die lösemittelhaltigen Formen der Komponenten oder der Gemische davon weitgehend von Lösemitteln befreit werden, bevorzugt durch Destillation unter vermindertem Druck, worauf bevorzugt in die noch warmen, dünnviskosen Harze bzw. Harzmischungen der Emulgator eindispergiert werden kann und dann diese Mischung zu der Wasserphase gefügt werden kann, beispielsweise unter intensivem Mischen. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispersionsergebnis durch Hochdruck- oder Ultraschall-Homogenisatoren zu verbessern.

Das Verfahren kann kontinuierlich oder diskontinuierlich geführt werden. Die entstehenden Dispersionen können auch zu diesem Zeitpunkt miteinander gemischt werden. Man erhält eine wäßrige Öl-in-Wasser-Dispersion, die lagerstabil ist und mit Wasser ohne Probleme auf geringere, zur Applikation geeignete Festkörpergehalte eingestellt werden kann. Die erfindungsgemäß erhaltenen wäßrigen Dispersionen können beispielsweise einen Festkörperbereich von 25 - 70 Gew.%, bezogen auf die fertige Dispersion, aufweisen. Zur Applikation können sie gegebenenfalls mit Wasser, z.B. auf eine geeignete Spritzviskosität verdünnt werden.

Als Emulgatoren sind handelsübliche ionische oder nicht-ionische Emulgatoren geeignet. Es können beispielsweise Umsetzungsprodukte von Alkylphenyolen mit Alkylenoxiden oder Umsetzungsprodukte von Sorbitanfettsäureestern mit Alkylenoxiden, z.B. C₁-C₁₂-Alkylphenolethoxylate, verwendet werden.

Überzugsmittel auf Lösemittelbasis enthalten bevorzugt einen Bindemittelanteil von bis zu 70 Gew.%, besonders bevorzugt bis zu 60 Gew.%. Die Untergrenze liegt bevorzugt über 30 Gew.%, bezogen jeweils auf das fertige Überzugsmittel.

Die erfindungsgemäßen Überzugsmittel können aus den Einzelkomponenten nach üblichen, dem Fachmann geläufigen, Verfahren hergestellt werden. Zur Herstellung der Überzugsmittel können den erfindungsgemäß eingesetzten Vernetzungs- und Bindemittelkomponenten gegebenenfalls übliche lacktechnische Additive zugesetzt werden, wie z.B. Antikratermittel, Antischaummittel, Verlaufsmittel, Antiabsetzmittel, Viskositätsregler, UV-Stabilisatoren oder Haftvermittler. Über die Menge der Additive können die Applikations- und Verfilmungseigenschaften beeinflußt werden.

Es können gegebenenfalls auch bekannte Pigmente und/oder Füllstoffe in das Überzugsmittel eingearbeitet werden. Die Verfahren, z.B. Dispergieren oder Vermahlen, sind in der Literatur schon häufig beschrieben. Als Pigmente sind die üblichen Pigmente für Grundierungen, Füller, Klar- oder Decklacke geeignet, beispielsweise Ruß, Titandioxid, feindisperses Siliciumdioxid, Aluminiumsilikat, Talkum, organische und anorganische Farbpigmente, transparente Farbstoffe, Metalleffekt-Pigmente oder vernetzte Polymer-Mikroteilchen. Je nach Auswahl der Pigmente und Füllstoffe können Metalleffekt-Decklacke, farbige Decklacke oder Klarlacke hergestellt werden.

Die erfindungsgemäßen Überzugsmittel können organische Lösemittel enthalten. Diese dienen zur Einstellung der Viskosität bei der Applikation sowie zur Beeinflussung des Verlaufs sowie um bestimmte Lackeffekte zu erzielen. Beispiele für solche Lösemittel sind aromatische Kohlenwasserstoffe, z.B. Xylol, aliphatische Kohlenwasserstoffe, z.B. n-Hexan oder Cyclohexan, Ketone, wie z.B. Aceton, Methylisopropylketon, Ester, wie z.B. Butylacetat oder Ethylacetat, Ether, wie z.B. Methoxypropanol oder Butoxypropanol oder Alkohole, wie z.B. Isopropanol, Hexanol oder Ethylglykol. Über den Siedepunkt oder das unterschiedliche Lösevermögen der Lösemittel können Applikations- und Verlaufseigenschaften beeinflußt werden. Die zugesetzte Lösemittelmenge hängt somit von den gewünschten Eigenschaften, insbesondere Viskositätseigenschaften, der Überzugsmittel ab. Bei Verwendung von Wasser als Lösemittel entstehen echte Lösungen, Emulsionen oder Dispersionen. Wasserhaltige Überzugsmittel besitzen einen besonders geringen Gehalt an flüchtigen organischen Bestandteilen.

Die erfindungsgemäßen Überzugsmittel sind Einkomponenten-Systeme. Sie zeichnen sich durch eine hohe Lagerstabilität aus und können mehr als sechs Monate ohne wesentliche Viskositätsänderungen gelagert werden. Als Substrate sind metallische Substrate, Kunststoffe, Holz oder mit Überzügen vorbeschichtete Substrate geeignet.

Die erfindungsgemäßen Überzugsmittel können wäßrig oder nicht-wäßrig aufgebaut sein. Bei den wäßrigen System ist es möglich, die Additive gegebenenfalls in die wäßrige Dispersion der Komponente A) oder der Komponente B) einzuarbeiten. Diese Komponenten können gegebenenfalls vor der Applikation zum Überzugsmittel gemischt werden. Vorzugsweise ist es jedoch möglich, auch wäßrige Einkomponenten-Systeme herzustellen.

Die erfindungsgemäßen Überzugsmittel werden nach bekannten Verfahren, wie z. B. Spritzen, Tauchen, Rollen oder Rakeln, appliziert. Dabei wird auf das gegebenenfalls schon mit weiteren Lackschichten versehene Substrat der Decklacküberzug aufgetragen. Nach einer Abdunstphase (bei bis zu 80°C) wird das applizierte Überzugsmittel durch Erwärmen vernetzt. Die Einbrenntemperaturen liegen zwischen 100 bis 180°C, bevorzugt zwischen 110 bis 150°C. Wenn photochemisch aktivierbare Radikalinitiatoren enthalten sind, kann gleichzeitig mit dem Einbrennen oder anschließend an das Einbrennen eine Härtung durch Bestrahlung, beispielsweise mit UV-Licht erfolgen. Die Schichtdicke des eingebrannten Films beträgt ca. 15 - 50 µm. Dabei entsteht ein vernetzter, harter, glänzender sowie säurebeständiger Lacküberzug. Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Es ist auch möglich, den Lack zu erwärmen und heiß zu applizieren, beispielsweise auf 60 bis 100°C. Hierdurch kann der Lack mit hohem Verarbeitungsfestkörper appliziert werden, da durch das Erwärmen die Viskosität reduziert wird.
Es ist auch möglich, den Lack mit überkritischem Kohlendioxid als Lacklösemittel zu versetzen und nach dem sogenannten Unicarb-Verfahren, wie es beispielsweise in der EP-A-0 321 607 und in der EP-A-0 388 927 beschrieben ist, zu applizieren.
Mit erfindungsgemäß als Klarlacke formulierten Überzugsmitteln können beispielsweise Basislacke überlackiert werden, die übliche Decklackpigmente enthalten können, bevorzugt enthalten sie Effektpigmente, wie z. B. Metallic-Pigmente. Als Bindemittelbasis des Basislacks werden bevorzugt Polyester, Polyurethan- oder Acrylatharze eingesetzt. Diese Bindemittel können gegebenenfalls über Vernetzer, z.B. Melamin- oder Isocyanatderivate, vernetzt werden.
Die erfindungsgemäßen Überzugsmittel eignen sich besonders für Decklacke oder Klarlacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, sie kann jedoch auch für andere Zwecke verwendet werden, wie z. B. für Haushaltsgeräte oder in der Möbelindustrie, um besonders säurestabile Überzüge zu erhalten.
Die folgenden Beispiele dienen zur Erläuterung der Erfindung. Alle Teile (T) und Prozentangaben (%) beziehen sich auf das Gewicht.

### Beispiel 1

### Herstellung eines Harzes mit umesterungsfähigen Gruppen (Komponente A)

807 T eines handelsüblichen Polycaprolactontriols (CAPA305, eingetragenes Warenzeichen der Fa. Interox Chem. Ltd.) werden in einem Reaktionsgefäß mit 700 T Butylacetat, 350 T Solvesso 100 (Gemisch aus aromatischen Kohlenwasserstoffen, eingetragenes Warenzeichen) und 995 T 3-Isocyanatomethyl-3,5,5-trimethyl-cyclohexyisocyanat bei 80°C umgesetzt, bis ein NCO-Gehalt von 6,6 Gew.-% erreicht ist. Danach werden 637 T Acetessigsäureethylester zugegeben und bei 100°C in Gegenwart von 10 T Zinkacetylacetonat so lange gehalten, bis ein NCO-Gehalt von weniger als 0,1 Gew.-% erreicht ist.
Das Harz hat eine Viskosität von 1500 mPas (25°C).

### Beispiel 2

### Herstellung eines acryloylfunktionellen Harzes (Komponente B)

a) In einem 4 1-Dreihalskolben, der mit Rührer, Thermometer, Tropftrichter und einem Rückflußkühler versehen ist, werden 1000 T Xylol vorgelegt und unter Rühren auf 90°C erhitzt. Innerhalb von 5h wird eine Mischung aus
   380 T Glycidylmethacrylat
   128 T Butylmethacrylat
   252 T Butylacrylat
   200 T Styrol und
   40 T Tert.-Butylperoctoat
   zugetropft. Das erhaltene epoxyfunktionelle Harz hat eine Viskosität von 70 mPas (25°C) und einen Festkörper von 50,1 % (1h/150°C).
b) 800 T dieses Harzes werden in einem 2 1-Kolben, der mit Rührer, Thermometer, Tropftrichter und Rückflußkühler versehen ist, unter Rühren auf 90°C erwärmt. Bei dieser Temperatur wird eine Mischung aus 50 T Acrylsäure und 1 T Triphenylphosphit innerhalb von 20 min. zugetropft und anschließend bis zum Erreichen einer Säurezahl von 1 mg KOH/g umgesetzt. Anschließend wird unter Vakuum auf einen Festkörpergehalt von 60 Gew.-% eingeengt.

### Beispiele 3a bis 3f

### Herstellung von Klarlackzusammensetzungen

Unter Verwendung der in den beiden Beispielen 1 bzw. 2 bereiteten Komponenten A und B, sowie unter Verwendung eines handelsüblichen oligomeren Benzpinakolsilylethers als Radikalinitiator (Komponente C) wurden die folgenden Klarlackzusammensetzungen 3a bis 3f bereitet.

| **Klarlack** | **1 (Komponente A)** | **2b (Komponente B)** | **3 (Komponente C)** |
|---|---|---|---|
| 3a | 10 T | 90 T | 0 T |
| 3b | 10 T | 90 T | 3 T |
| 3c | 20 T | 80 T | 0 T |
| 3d | 20 T | 80 T | 3 T |
| 3e | 40 T | 60 T | 0 T |
| 3f | 40 T | 60 T | 3 T |

Die Klarlacke wurden auf Glasplatten in einer Trockenfilmschichtdicke von 30 µm aufgerakelt und 20 Minuten bei 140°C eingebrannt. Der Vernetzungsgrad wurde durch Bestimmung der Pendelhärten (König) vor, direkt nach einer 10minütigen Einwirkzeit von Xylol und nach einer 2stündigen Regenerationszeit bestimmt. Die Vergleichsproben ohne Radikalinitiator zeigen eine wesentlich stärkere Erweichung unter Xyloleinwirkung als die erfindungsgemäßen Proben mit Radikalinitiator.

| | **Pendelhärte (nach König) in Sekunden** | | |
|---|---|---|---|
| **Klarlack** | **vor Xylolbehandlung** | **direkt nach Xylolbehandlung** | **nach 2stündiger Regenerationszeit** |
| **3a** | **72** | **52** | **11** |
| **3b** | **183** | **79** | **121** |
| **3c** | **145** | **47** | **14** |
| **3d** | **196** | **156** | **166** |
| **3e** | **204** | **31** | **18** |
| **3f** | **218** | **190** | **199** |

### Beispiel 4

### Herstellung eines wäßrigen Klarlackes

a) Die Komponenten A, B und C werden, wie in Beispiel 3 definiert, in den Mengen des Beispiels 3f gemischt und unter Vakuum bei maximal 60°C auf einen Festkörpergehalt von 80 Gew.-% eingeengt.
b) In einem 1 Liter-Kolben werden 155,2 T einer 10 %igen wäßrigen Lösung eines Emulgators auf der Basis eines Polyoxypropylenpolyoxyethylensorbitansäurediesters bei 60°C vorgelegt. Das Gemisch wird mit einem Rührer, der bei einer Geschwindigkeit von ca. 8500 U/min. rotiert, gerührt. Innerhalb von 3 min. werden bei 60°C 388 T der unter 4a hergestellten Bindemittelmischung zugegeben. Es werden 50 T vollentsalztes Wasser zugegeben. Die erhaltene milchig-weiße Emulsion hat einen Festkörpergehalt von 54,5 Gew.-%.
c) Klarlackzusammensetzung
   77,9 T Emulsion von 4b
   22,1 T vollentsalztes Wasser.

Der wäßrige Klarlack hat einen Festkörpergehalt von 42,4 Gew.-%. Er wird mit einer Spritzpistole (1,3 mm Düse) in einer Trockenfilmschichtdicke von ca. 50 µm auf blankes Eisenblech bzw. auf mit einer Mehrfachbeschichtung aus Elektrotauchgrundierung, Füller und Wasserbasislack beschichtetem Eisenblech appliziert und nach einer 20minütigen Abdunstphase (10 min Raumtemperatur, 10 min 80°C) 20 min. bei 140°C eingebrannt.

Der eingebrannte Film weist eine hohe Härte und gute Lösemittelbeständigkeit bei guter Optik auf.

| | | |
|---|---|---|
| Eigenschaften: | | |
| auf Eisenblech | Pendelhärte: | 170s |
| | MEK-Rub : | >100 |
| | | |
| Im Aufbau: | Glanz (20°): | 87 |
| | Pendelhärte: | 117s |
| | H₂SO₄(10%,65°C): | eine erste leichte Einwirkung ist nach 13 min. sichtbar. |
| | | |
| Gitterschnitt: | Kennwert: | sehr gut bis gut |

## Patentansprüche

1. Bindemittelzusammensetzung, enthaltend
A) 10 - 90 Gew.-% einer oder mehrerer als Vernetzer wirkender Verbindungen mit im Mittel mindestens zwei zur Umesterung befähigten Gruppen.
B) 90 - 10 Gew.-% eines oder mehrerer (Meth (Meth)acrylcopolymere, Polyester- und/oder Polyurethanharze mit mindestens einer über das Carbonyl-Kohlenstoffatom von 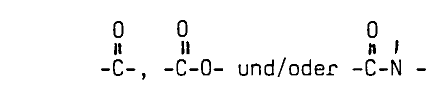 gebundenen alpha,beta-ungesättigten Gruppe,
mit einem C=C-Äquivalentgewicht von 85 - 1800 und einem Zahlenmittel (Mn) der Molmasse von 170 - 10000 g/mol, sowie einer OH-Zahl von 20 bis zu 350 mg KOH/g, wobei sich die Gew.-% der Komponenten A und B jeweils auf den Festkörper beziehen und zu 100 Gew.-% addieren, sowie
C) 0,1 - 10 Gew.-% eines oder mehrerer thermisch und/oder photochemisch aktivierbarer Initiatoren.
D1)0 - 20 Gew.-% eines oder mehrerer Melaminharzvernetzer,
D2)0 - 40 Gew.-% eines oder mehrerer blockierter Polyisocyanate,
E) 0 - 40 Gew.-% eines oder mehrerer (meth)acryloyl-funktionalisierter Reaktivverdünner, die frei von OH-Gruppen sind,
F) 0 - 30 Gew.-% eines oder mehrerer Diole, Triole, Polyole und/oder
hydroxy-funktioneller Polyether, Polyester und/oder (Meth)acrylcopolymerer
sowie gegebenenfalls Lösemittel, lackübliche Additive, gegebenenfalls Wasser, gegebenenfalls Pigmente und gegebenenfalls Füllstoffe,
wobei sich die Gew.-% der Komponenten C), D1), D2) E) und F) jeweils auf den Festkörper und auf die Summe der Gew.-% der Komponenten A) und B) beziehen.

2. Bindemittelzusammensetzung nach Anspruch 1, worin die Vernetzerkomponente A) im Mittel mindestens zwei gleiche oder verschiedene der folgenden Gruppen enthält: 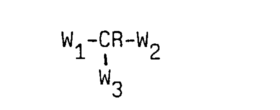 worin R = H, Alkyl oder Aryl, 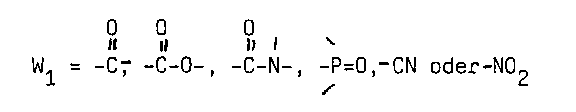 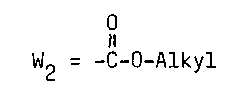 als umesterungsfähige Gruppe, 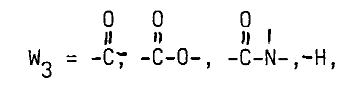 Alkyl oder Alkylen
wobei die Reste 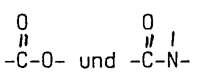 jeweils über das Kohlenstoffatom an die CR-Gruppe gebunden sind und die CR-Gruppe über mindestens einen der Reste W₁ und/oder W₃ an eine polymere oder oligomere Einheit gebunden ist.

3. Bindemittelzusammensetzung nach einem der Ansprüche 1 oder 2, dadurch gekennzeichnet, daß sie in lösemittelfreier Form vorliegt.

4. Bindemittelzusammensetzung nach einem der Ansprüche 1 oder 2, dadurch gekennzeichnet, daß sie in lösemittelhaltiger Form vorliegt.

5. Bindemittelzusammensetzung nach einem der Ansprüche 1, 2, 3 oder 4, dadurch gekennzeichnet, daß sie in wäßriger Form vorliegt.

6. Überzugsmittel, enthaltend die Bindemittelzusammensetzung nach einem der Ansprüche 1 bis 5 und darüber hinaus ein oder mehrere organische Lösemittel und/oder Wasser, sowie Pigmente und/oder Füllstoffe und gegebenenfalls lackübliche Zusatzstoffe.

7. Überzugsmittel nach Anspruch 6 in wäßriger Form mit einem Lösemittelgehalt von 0 bis 20 Gew.-% bezogen auf das gesamte Überzugsmittel.

8. Überzugsmittel nach Anspruch 6 oder 7 enthaltend Wasser und einen oder mehrere Emulgatoren.

9. Verfahren zur Herstellung von Überzügen, durch Auftrag eines Überzugsmittels auf ein zu lackierendes Substrat und anschließende thermische Härtung des erhaltenen Überzugs, dadurch gekennzeichnet, daß man ein Überzugsmittel nach einem der Ansprüche 6 bis 8 verwendet und die Härtung bei Temperaturen von 100 bis 180°C durchführt.

10. Verfahren zur Herstellung von Mehrschicht-Lackierungen durch Auftrag eines Basislacks auf ein zu lackierendes Substrat, gegebenenfalls kurzes Ablüften und naß-in-naß-Auftrag eines Klarlacks und anschließende gemeinsame thermische Härtung, dadurch gekennzeichnet, daß man als Basislack und/oder Klarlack ein Überzugsmittel nach einem der Ansprüche 6 bis 8 verwendet.

11. Verfahren nach Anspruch 9 oder 10, dadurch gekennzeichnet, daß als Komponente C) ein Initiator mit labiler C-C-Bindung verwendet wird.

12. Verwendung der Bindemittel nach einem der Ansprüche 1 bis 5 oder der Überzugsmittel nach einem der Ansprüche 6 bis 8 bei der Herstellung von säurebeständigen Klar- oder Decklacküberzügen, Basislacküberzügen, Füllerschichten und Grundierungen.

13. Verwendung nach Anspruch 12 zur Herstellung von Klar- oder Decklacküberzügen, Füllerschichten und/oder Grundierungen in Mehrschichtlackierungen.

14. Verwendung der Bindemittel nach einem der Ansprüche 1 bis 5 oder der Überzugsmittel nach einem der Ansprüche 6 bis 8 bei der Lackierung von Kraftfahrzeugen.

## Claims

1. A binder vehicle composition, containing
A) 10 - 90 % by weight of one or more compounds which act as crosslinking agents and which contain, on average, at least two groups capable of transesterification,
B) 90 - 10 % by weight of one or more (math)acrylic copolymers, polyester- and/or polyurethane resins comprising at least one alpha,beta-unsaturated group which is bonded via the carbonyl carbon atom of 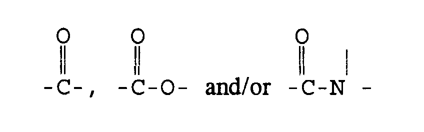 with a C=C equivalent weight of 85 - 1800 and a number average molecular weight (Mn) of 170 - 10,000 g/mole, and with an OH number of 20 to 350 mg KOH/g, wherein the percentages by weight of components A and B are each given with respect to the solids and add up to 100 % by weight, and containing
C) 0.1 - 10 % by weight of one or more thermally and/or photochemically activatable initiators,
D1) 0 - 20 % by weight of one or more melamine resin crosslinking agents,
D2) 0 - 40 % by weight of one or more blocked polyisocyanates,
E) 0 - 40 % by weight of one or more (math)acryloyl-functionalised reactive thinners which are free from OH groups,
F) 0 - 30 % by weight of one or more diols, triols, polyols and/or
hydroxy-functional polyethers, polyesters and/or (math)acrylic copolymers
and optionally containing solvents, customary lacquer additives, optionally water, optionally pigments and optionally extenders,
wherein the percentages by weight of components C), D1), D2), E) and F) are each given with respect to the solids and with respect to the sum of the percentages by weight of components A) and B).

2. A binder vehicle composition according to claim 1, wherein crosslinking component A) contains, on average, at least two of the following groups, which are the same or different: 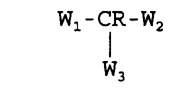 where R = H, alkyl or aryl, 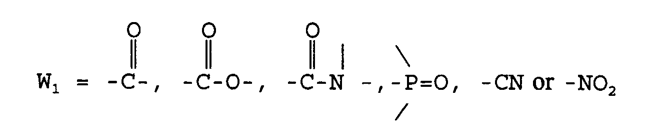 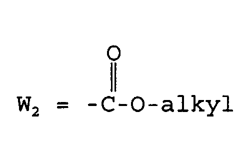 as the group capable of transesterification, 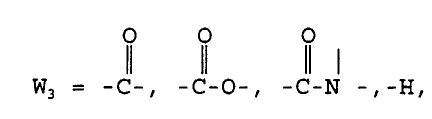 alkyl or alkylene
wherein the 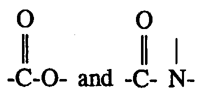 radicals are each bonded to the CR group via the carbon atom, and the CR group is bonded to a polymeric or oligomeric unit via at least one of the W₁ and/or W₃ radicals.

3. A binder vehicle composition according to either one of claims 1 or 2, characterised in that it exists in solvent-free form.

4. A binder vehicle composition according to either one of claims 1 or 2, characterised in that it exists in solvent-containing form.

5. A binder vehicle composition according to any one of claims 1, 2, 3 or 4, characterised in that it exists in aqueous form.

6. A coating medium containing the binder vehicle composition according to any one of claims 1 to 5 and additionally containing one or more organic solvents and/or water, as well as pigments and/or extenders and optionally customary lacquer additives.

7. A coating medium according to claim 6 in aqueous form, with a solvent content of 0 to 20 % by weight with respect to the total coating medium.

8. A coating medium according to claim 6 or 7 containing water and one or more emulsifiers.

9. A method of producing coatings by the application of a coating medium to a substrate to be coated and the subsequent thermal hardening of the coating obtained, characterised in that a coating medium according to any one of claims 6 to 8 is used and hardening is effected at temperatures of 100 to 180°C.

10. A method of producing multi-layer coatings by the application of a base lacquer to a substrate to be coated, optionally with a brief aeration, and wet-into-wet application of a clear lacquer and subsequent joint thermal hardening, characterised in that a coating medium according to any one of claims 6 to 8 is used as the base lacquer and/or clear lacquer.

11. A method according to claim 9 or 10, characterised in that an initiator comprising a labile C-C bond is used as component C).

12. The use of the binder vehicles according to any one of claims 1 to 5 or of the coating media according to any one of claims 6 to 8 for the production of acid-resistant clear lacquer or covering lacquer coatings, base lacquer coatings, primer surfacer coats and primer coats.

13. A use according to claim 12 for producing clear lacquer or covering lacquer coatings, primer surfacer coats and/or primer coats in multi-layer coatings.

14. The use of the binder vehicles according to any one of claims 1 to 5 or of the coating media according to any one of claims 6 to 8 for the coating of motor vehicles.

## Revendications

1. Composition de liant contenant
A) de 10 à 90 % en poids d'un ou plusieurs composés ayant un rôle de réticulant avec en moyenne au moins deux groupes aptes à la transestérification.
B) de 90 à 10 % en poids d'un ou plusieurs copolymères (méth)acryliques, résines polyesters et/ou polyuréthane avec au moins un groupe alpha, bêta- insaturé lié par l'intermédiaire de l'atome de carbone de carbonyle de 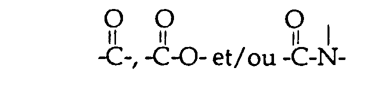 avec un poids d'équivalent C=C de 85-1800 et une moyenne en nombre (Mn) de la masse molaire de 170 -10 000 g/mole, ainsi qu'un indice d'OH de 20 à 350 mg de KOH/g, le pourcentage pondéral des composants A et B étant toujours calculé par rapport au corps solide et s'élevant au total à 100 % en poids, ainsi que
C) 0,1-10 % en poids d'un ou plusieurs initiateurs activables thermiquement ou photochimiquement.
D1) 0-20 % en poids d'un ou plusieurs agents réticulants de résine mélamine,
D2) 0-40 % en poids d'un ou plusieurs poly-isocyanates bloqués,
E) 0-40 % en poids d'un ou plusieurs diluants de réactifs à fonction (méth)acrylol, qui sont dépourvus de groupes OH,
F) 0 à 30 % en poids d'un ou plusieurs diols, triols, polyols, et/ou polyéthers, polyesters, et/ou copolymères (méth)acryliques à fonction hydroxy,
ainsi que, le cas échéant, des solvants, des additifs habituels pour les laques, le cas échéant de l'eau, le cas échéant des pigments, et le cas échéant des charges,
le pourcentage pondéral des composants C), D1), D2), E) et F) étant toujours calculé par rapport au solide et à la somme des pourcentages pondéraux des composants A) et B).

2. Composition de liant selon la revendication 1, dans laquelle le composant réticulant A) contient en moyenne au moins 2 groupes identiques ou différents parmi les suivants : 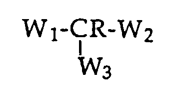 où R = H, alkyle ou aryle, 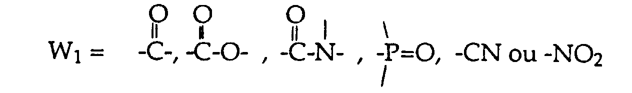 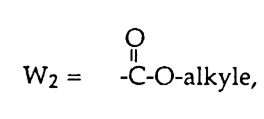 comme groupes aptes à la transestérification, 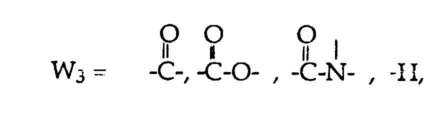 alkyle ou alkylène
où les radicaux 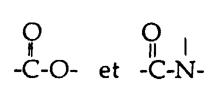 sont toujours liés par l'intermédiaire de l'atome de carbone au groupe CR et le groupe CR est lié par l'intermédiaire d'au moins un des radicaux W₁ et/ou W3 à une unité polymère ou oligomère.

3. Composition de liant selon l'une des revendications 1 ou 2, caractérisée en ce qu'elle est présente sous forme dépourvue de solvant.

4. Composition de liant selon l'une des revendications 1 ou 2, caractérisée en ce qu'elle se présente sous une forme contenant un solvant.

5. Composition de liant selon l'une des revendications 1, 2, 3 ou 4, caractérisée en ce qu'elle se présente sous forme aqueuse.

6. Revêtement contenant la composition de liant selon l'une des revendications 1 à 5 et, en outre, un ou plusieurs solvants organiques et/ou de l'eau ainsi que des pigments et/ou des charges et le cas échéant des additifs habituels pour laques.

7. Revêtement selon la revendication 6 sous forme aqueuse avec une teneur en solvant de 0 à 20 % en poids par rapport à l'ensemble du revêtement.

8. Revêtement selon la revendication 6 ou 7 contenant de l'eau et un ou plusieurs émulsifiants.

9. Procédé de préparation de revêtements par dépôt d'un revêtement sur un substrat à laquer puis durcissement chimique du revêtement obtenu, caractérisé en ce qu'on utilise un revêtement selon l'une des revendications 6 à 8 et en ce qu'on effectue le durcissement à des températures de 100 à 180°C.

10. Procédé de préparations d'enduits de laques à plusieurs couches par dépôt d'une laque de base sur un substrat à laquer, éventuellement courte aération et dépôt dans un mode humide sur humide d'une laque claire, puis durcissement thermique commun, caractérisé en ce qu'on utilise, comme laque de base et/ou comme laque claire, un revêtement selon l'une des revendications 6 à 8.

11. Procédé selon la revendication 9 à 10, caractérisée en ce qu'on utilise comme composant C) un initiateur avec liaison C-C labile.

12. Utilisation des liants selon l'une des revendications 1 à 5 ou des revêtements selon l'une des revendications 6 à 8 dans la préparation de revêtements de laques claires ou de recouvrement résistantes aux acides, de revêtements de laques de base, de couches de matières de remplissage et d'apprêts.

13. Application selon la revendication 12 à la préparation de revêtements de laque claire ou de laque de revêtement, de couches de remplissage et/ou d'apprêt dans des enduits de laques à plusieurs couches.

14. Utilisation des liants selon l'une des revendications 1 à 5 ou des revêtements selon l'une des revendications 6 à 8 dans le laquage des véhicules automobiles.
